# EUROPEAN PATENT SPECIFICATION

(11) **EP 0 541 844 B1**
(45) Date of publication and mention of the grant of the patent: **29.01.1997**
(21) Application number: 91119251.6
(22) Date of filing: 12.11.1991
(51) Int. Cl.: E01C 13/00, A01G 9/10

(54) **Artificial ground**
Künstliche Boden
Sol artificiel

(43) Date of publication of application: 19.05.1993
(73) Proprietor: WATARI, Shigenobu, Nagano-shi, Nagano 381-22 (JP)
(72) Inventor: WATARI, Shigenobu, Nagano-shi, Nagano 381-22 (JP)
(74) Representative: Sunderland, James Harry

(56) References cited:
- DE-A- 1 534 384
- DE-A- 3 418 493
- US-A- 3 916 565
- WORLD PATENTS INDEX LATEST Section Ch, Week 9013, Derwent Publications Ltd., London, GB; Class C, AN 90-094944 & JP-A-2 046 228 (WATARI) 15 February 1990 & PATENT ABSTRACTS OF JAPAN vol. 014, no. 208 (C-0714) April 1990 & JP-A-20 046 228 (WATARI) 15 February 1990
- WORLD PATENTS INDEX LATEST Section Ch, Week 9130, Derwent Publications Ltd., London, GB; Class C, AN 91-218406 & JP-A-3 139 216 (TAKEDA ENGEI) 13 June 1991
- PATENT ABSTRACTS OF JAPAN vol. 014, no. 208 (C-0714) 27 April 1990 & JP-A-20 046 230 (SHIGENOBU WATARI) 15 FEBRUARY 1990

## Description

### BACKGROUND OF THE INVENTION

### 1.Field of the Invention

The present invention relates to artificial ground suitable for use in a golf course, the ground unsuitable for cultivation and the like.

### 2. Description of the Relevant Art

Heretofore, in a place such as a golf course where a large quantity of water is used for green or lawn, water is intensively controlled. For example, Japanese Patent Unexamined Patent Publication Nos.63-28331 and 1-120226 disclose a method in which water-unpenetrative sheet is spread under the ground on which green planted and water penetrating through the green is collected by the sheet for re-utilization. In this manner, security and effective utilization of water source is important subject in the golf course.

On the other hand, there is a danger that scattering of agricultural chemicals for extermination of diseases and noxious insects contaminates environment seriously. Agricultural chemicals scattered onto green in a wide golf course is mixed into a reservoir for city water together with rainwater and drinking water is contaminated. Thus, contamination of environment by agricultural chemicals is a large social problem and it is desired that agricultural chemicals to be scattered is minimized.

However, since there are a lot of diseases and noxious insects (cockroaches, ticks, nematodes and the like) which are media of virus in a golf course using the natural soil, extermination of diseases and noxious insects by agricultural chemicals is avoided and there is no guarantee that contamination of environment can be suppressed exactly. Further, the natural soil can not increase an amount of collection of water, that is, a collection efficiency because of its penetration sufficiently and accordingly the practicality is lacking.

DE-A-34 18 493 discloses lawn system in which the lawn is carried by a sand layer. Under the sand layer there is filter layer, and beneath this a layer of plates of opencelled resin foam. Under the resin foam plates there is a drainage trench with a sheet of plastics foil below this. The filter layer prevents sand entering the open cell resin foam. The resin foam has a large water storage capacity. The sheet of plastics foil collects water in the drainage trench and prevents water loss.

JP-A-2 046228 (Patent Abstracts of Japan, Vol. 14, No. 208 (C-0714), 27th April 1990 and World Patent Index Latest, Section Ch, Week 9013, Derwent Publications Ltd. London, GB, Class C, AN 90-094944) and JP-A-2 046 230 (Patent Abstracts of Japan, Vol. 14, No. 208 (C-0714), 27th April 1990) disclose artificial soils using the remainder of fermentation materials or sawdust - which has already been employed as a culture ground for mushrooms - water and other additives.

### SUMMARY OF THE INVENTION

According to the present invention there is provided an artificial ground comprising
a collection layer including an inclined sheet member capable of collecting liquid agricultural chemicals or water,
a soil supporting layer including a water-penetrative soil supporting member disposed on the collection layer, and
an artificial soil layer provided on the soil supporting layer, which artificial soil layer includes as a main ingredient the remainder of fermentation material or husks of broken seeds or pulverized husks of seeds or corncobs or sawdust, which main ingredient may have been employed as a culture ground for mushrooms prior to incorporation in the artificial soil layer.

The object of the present invention is to provide artificial ground in which there is less virus and an amount of agricultural chemicals to be used can be remarkably reduced so that contamination of environment due to scattered agricultural chemicals can be prevented exactly and a contamination problem of environment of, for example, a golf course can be solved.

A further object of the present invention is to provide artificial ground in which the penetration of water is enhanced greatly and the collection efficiency of water is remarkably improved, to provide effective utilization of water source.

Thus, the present invention can provide artificial ground which can be applied to other fields such as to cultivate plants even in the ground unsuitable for cultivation and increase kinds of cultivable plants and can attain cultivation of good quality plants, reduction of food pollution and a long life of plants due to reduction of agricultural chemicals.

The artificial ground comprises a collection layer Cl including sheet member 2 capable of collecting liquid agricultural chemicals W1 or water W2, a soil supporting layer C2 including a soil supporting and water-penetrative member 3 disposed on the collection layer C1, and an artificial soil layer C3 including artificial soil 4 disposed on the soil supporting layer C2, and is used for example for lawn ground 10 in a golf course. Further, the artificial soil 4 includes artificial soil containing remainder of fermentation material or artificial soil containing pulverized husk of seeds as a main component or artificial soil containing sawdust as a main component, desirably having at least controlled water as a main component and combined with at least one or two additives required for soil.

With such artificial ground 1, virus-free green for the golf course is attained and an amount of necessary agricultural chemicals is required greatly. Further, the artificial ground 1 comprises the three layers of the artificial soil layer C3, the soil supporting layer C2 and the collection layer C1 from the upper side. Accordingly when liquid agricultural chemicals W1 or water W2 is scattered on the surface of the artificial soil 4, the liquid agricultural chemicals W1 or water W2 penetrates into the artificial soil layer C3 and then reaches the collection layer C1 having the inclined sheet member 2 through the water-penetrative soil supporting layer C2 so that the liquid agricultural chemicals or water is all collected. Consequently, the liquid agricultural chemicals W1 or water W2 is subjected to necessary filtration and is discarded. Further, the liquid agricultural chemicals W1 or water W2 can be used circularly.

In this case, since an upper portion and a lower portion is separated by the sheet member 2 the liquid agricultural chemicals can be prevented from penetrating into the lower portion through the sheet member 2 so that contamination of environment can be prevented.Further, penetration of virus into the upper portion through the sheet member 2 can be prevented so that the artificial soil 4 can be maintained virus-free for a long time.

Further,since the artificial soil 4 has extremely large penetration of water, the collection rate of water and liquid agricultural chemicals is increased greatly to thereby attain the synergism of ensurement and effective utilization of water source in the golf course and prevention of contamination of environment due to reduced liquid agricultural chemicals.

### BRIEF DESCRIPTION OF THE DRAWINGS

Fig. 1 is a section view of artificial ground according to the present invention which is applied to a golf course.

Fig. 2 is a principle structure of the carbonization system of the culture ground for mushrooms.

Fig. 3 is a sectional view of artificial ground according to the present invention which is applied to a cultivation system.

### DETAILED DESCRIPTION OF THE PREFERRED EMBODIMENTS

A preferred embodiment according to the present invention is now described in detail with reference to the drawings.

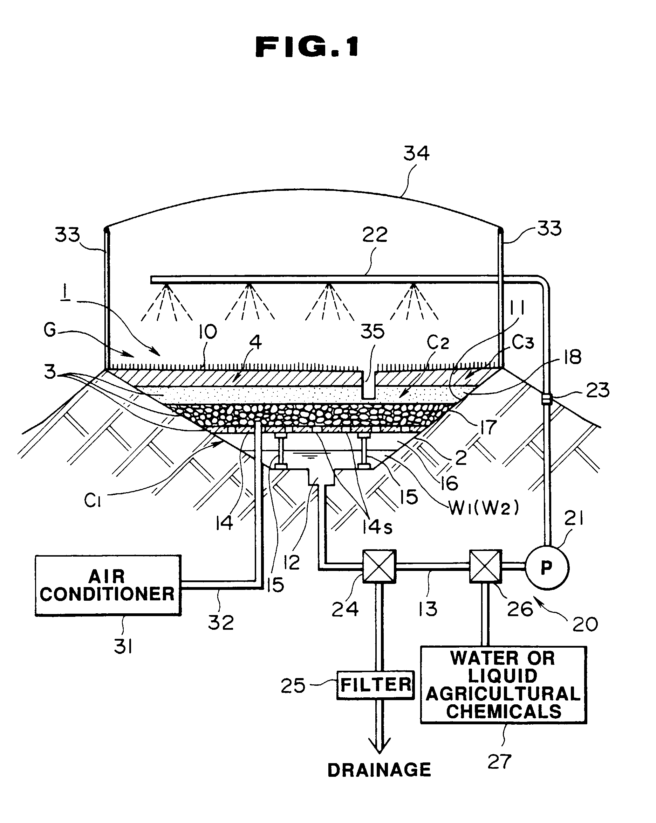

Construction of the artificial ground according to the present invention is now described with reference to Fig.1.

The embodiment shown in Fig. 1 illustrates the artificial ground applied to green G in a golf course.

A conical cavity 11 for forming an concave inclined surface is formed under the green G and a sheet member 2 is spread on the whole surface of the cavity 11. The sheet member 2 utilizes a relatively thick watertight sheet of, for example, vinyl chloride. Further, a drainage hole 12 is formed in a lowermost portion positioned in a substantially central portion of the sheet member 2 and a circular pipe 13 is connected to the drainage hole 12. The sheet member 2 constitutes a collection layer C1.

On the other hand, disposed in an intermediate position of the cavity 11 is a water-penetrative plate member 14 formed with a plurality of small holes 14s. The plate member 14 is supported at its predetermined positions by a plurality of posts 15. The plate member can be made of any material such as concrete, metal, wood and plastic. Thus, a reservoir space 16 can be formed under the plate member 14. Further,relatively large gravel 17 is spread on the plate member 14 and sand 18 is further spread on the gravel. The plate member 14, the gravel 17 and the sand 18 constitute a soil supporting material 3 and further constitute a soil supporting layer C2 having the water-penetrative property. The gravel 17 and the sand 18 are previously heated for sterilization. The soil supporting member 3 may use brick or block.

Artificial soil 4 is spread on the soil supporting layer C2 to constitute an artificial soil layer C3.

The artificial soil to be used is now described in detail.

Generally, a lot of remainder of fermentation material is produced in the brewing industry. Such remainder is utilized as a main component of a culture ground for mushroom. The reason why remainder on the way of manufacturing alcohol is not used as soil component directly and the culture ground for mushroom is manufactured intermediately is that re-fermentation (decomposition) of remainder is accelerated to improve physical, chemical and biophysical performance of soil and to attain utilization for cultivation of mushroom itself and enhance value added. Accordingly, it is not prevented that the remainder on the way of manufacturing alcohol is subjected to control of water directly and various additives required are combined thereto.

The remainder may utilize rind and flesh (wine) of grapes, wheat (whiskey, beer), hop (beer), rice (sake), sweet potato (vinegar), buckwheat (low-class distilled spirits) and the like.

Table 1 shows a composition of a culture ground for mushroom using the above remainder. Control of water is made in the manufacturing of the culture ground.

**TABLE 1**

| COMPOSITION OF CULTURE GROUND FOR MUSHROOM | |
|---|---|
| Remainder of Fermentation Material | 80-160g |
| Wheat Bran | 20-90g |
| Rice Bran | 10-60g |
| Bean-Curd Refuse (dry goods) | 20-70g |
| Water | Controlled to about 65% |
| (per cultivation bottle of 850 cc) | |

The culture ground for mushroom manufactured above is utilized to cultivate mushroom (Enokitake, Nameko, Hiratake and the like) by a known cultivation method of mushroom.

On the other hand, the culture ground for mushroom after harvest of mushroom is utilized as artificial soil. The artificial soil is manufactured in combination with at least one or two additives required for soil as shown in Table 2. The combination is implemented in a sterilized room to attain virus-free environment for manufacturing and the manufacturing is implemented while sterilizing if necessary.

**TABLE 2**

| COMPOSITION OF ARTIFICIAL SOIL | |
|---|---|
| Culture Ground for Mushroom | 60-80Weight% |
| mycotrophy Fungi | small |
| Husk of Seeds | 5-15Weight% |
| Mineral Component | 1- 3Weight% |
| Charcoal | 5-15Weight% |
| Soil or Sand | 5-30Weight% |

In this case, the additive required for soil contains additive required to exhibit the physical property (water-penetrative performance), the chemical property (acidity), the microbial property (clustered fungi: flora) and the composite property thereof required for soil. The additive is sterilized for use to attain virus-free.

All of the above additives are not required and necessary additives can be selectively added. Further, other additive than those of Table 2 can be added. The artificial soil as a finished product is subjected to control of water and is formed into powder, grain and soiled.

Further, the artificial soil may use artificial soil containing as a main component husk of broken seeds instead of the remainder.

More particularly, since a lot of corncobs or husk of seeds of peaches with flesh thereof removed are produced in the food industry, such husk of seeds is pulverized finely and is utilized instead of the remainder. The husk of seeds may utilize any other husk of seeds such as walnuts, rice hulls and apricots.

Further, artificial soil containing as a main component sawdust instead of the remainder may be used.

More particularly, mushroom such as Enokitake is cultivated in culture ground or soil for mushroom containing as a main component sawdust in a cultivation bottle. When the cultivation of mushroom is completed, a large quantity of culture soil to be discarded is produced. Such culture soil to be discarded is effectively used for artificial soil. It is not prevented that virgin sawdust not utilized as the culture soil for mushroom is used directly. Trees for sawdust may utilize pine trees, cryptomerias, beeches, oaks, palm trees, gum trees and the like irrespective of broadleaf trees and needle-leaf trees. Further, sawdust of white birches in trees attains good result.

Above-stated is an example of utilizing the culture ground for mushrooms directly after the harvest of mushrooms. However, the culture ground for mushrooms can be also utilizedafter being carbonized by the treatment system(40). The carbonization treatment is done as follows. First, prepare the culture ground for mushrooms(M) obtained after the cultivation of the mushrooms as stated above. Put the culture ground(M) into the heating furnace (41) and shut the culture ground airtight with the lid(43) to shut out oxygen. Keep heating the furnace (41) for 6∼12 hours with the heater (42),maintaining the high temperature of approx. 500∼700°C. Through this process, the culture ground (M) is carbonized. The smoke(S) generated from the culture ground(M) goes through the smoke-induction pipe(45) and is discharged from the chimney(46). The smoke(S) passing through the middle part of the smoke-induction pipe (45) is cooled by the cooling device (44) containing cooling water (Wc), and as a result, woodsap(P) is condensed. This sap(P) is discharged through the discharge pipe (47). The carbonized culture ground(M) is gradually cooled and then taken out from the heating furnace (41).

Also, the soil bacteria must be prepared to be inoculated into the carbonized culture ground(M). Bacillus subtilis, thermoactinomyces, Vesicular Arbuscvlar Symbiotic Fungi,etc. canbe used as soil bacteria. These soil bacteria are inoculated into the above-stated carbonized culture ground for mushrooms after being cultured further in a culture ground such as selected compost. And by continuing the cultivation for 50∼60 hours, while sending in warm breeze of 30∼60°C, the carbonized culture ground containing the fixed soil bacteria can be obtained.

Thus-obtained carbonized culture ground for mushrooms containing the fixed soil bacteria can be used as an improved artificial soil, by being mixed with common soil or with the above-mentioned artificial soil (4), by itself or with some other necessary additives. The wood sap(P) can be utilized as fertilizer or feed. When the carbonized culture ground with the fixed soil bacteria is dissolved in the water,the solution can be utilized as liquid fertilizer or as soil improvement solution.

The upper surface of the artificial soil layer C3 is substantially plane green G and the ground surface of the artificial soil 4 is lawn ground 10.

As described above, the fundamental artificial ground 1 is constructed.

Further, the artificial ground 1 is provided with a scattering system 20 of liquid agricultural chemicals W1.

The scattering system 20 includes the circular pipe 13 having one end thereof connected to the drainage hole 12 of the sheet member 2 and the other end connected to a scattering nozzle 22 through a water supply pump 21. The sheet nozzle 22 includes a plurality of jet orifices capable of scattering liquid agricultural chemicals W1 or water W2 on the green G and is detachably attached to the circular pipe 13 through a joint 23. On the other hand, a filter 25 is connected through a three-way valve 24 on the way of circular pipe 13 so that the circular pipe 13 communicates with the drainage side through the filter 25. A supply tank 27 capable of supplying the liquid agricultural chemicals W1 or water W2 is connected through a three-way valve 26 to other position of the circular pipe 13.

Further, an air conditioner 31 is connected to the soil supporting layer C2 through a blast pipe 32 so that warm air or cold air can be supplied to the soil supporting layer C2 if necessary. Further, in a snowy area, poles 33 are provided on the green G and support a cover 34 to construct a dome. Numeral 35 denotes a hole.

Function of artificial ground 1 provided with the scattering system 20 is now described.

Since the overlying artificial ground 1 is separated from the underlying natural soil by means of the sheet member 2, penetration of the liquid agricultural chemicals W1 water W2 into the lower portion of the sheet member 2 can be prevented so that contamination of environment due to the agricultural chemicals W1 can be prevented. Further, penetration of virus into the upper portion of the sheet member 2 can be also prevented so that the artificial soil 4 can be maintained virus-free for a long time.

On the other hand, when water or liquid agricultural chemicals are scattered, the three-way valve 26 is switched to connect the supply tank 27 to the circular pipe 13. Further, the water supply pump 21 is operated to supply the liquid agricultural chemicals W1 or water W2 in the supply tank 27 is supplied to the scattering nozzle 22. Thus, the liquid agricultural chemicals W1 or water W2 is scattered on the green G from the scattering nozzle 22.

Further, the scattered liquid agricultural chemicals W1 or water W2 is penetrated into the artificial soil layer C3 and passes through the soil supporting layer C2 consisting of the sand and/or charcoal 18, the gravel 17 and the plate material 14 to reach the sheet member 2. Thus, all of the scattered liquid agricultural chemicals W1 or water W2 is collected into the central reservoir space 16 by means of the inclined sheet member 2. In this case, when the three-way valve 24 is switched to supply the liquid agricultural chemicals W1 or water W2 collected in the reservoir space 16 to the filter 25, the liquid agricultural chemicals W1 or water W2 is made harmless and is drained into the drainage side so that contamination of environment due to the agricultural chemicals is prevented. Further, the collected liquid agricultural chemicals W1 or water W2 can be scattered from the scattering nozzle 22 through the circular pipe 13 to save the liquid agricultural chemicals W1 or water W2.

Further, cold air can be supplied from the air conditioner 31 in summer to cool the artificial soil, while warm air can be supplied from the air conditioner 31 in winter to warm the artificial soil.

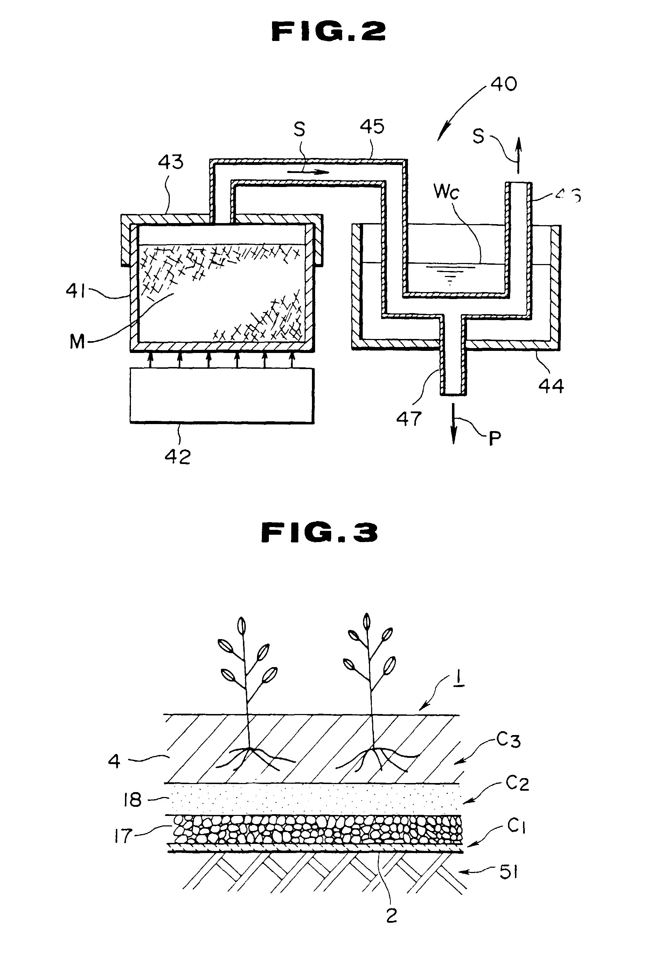

An embodiment in which the artificial ground 1 is applied to a usual cultivation system for vegetables, fruits and the like is now described with reference to Fig. 3.

The artificial ground for the cultivation system is fundamentally the same as in the case of the golf course shown in Fig. 1. Numeral 51 denotes an inclined foundation. The foundation includes natural soil unsuitable for cultivation such as barren soil, wet soil and desert, concrete of a rooftop of a building, asphalt of the ground and the like.

The sheet member 2 is spread on the foundation 51 to constitute the collection layer C1. Further, the gravel 17 and the sand 18 are spread on the sheet member 2 to provide the soil supporting layer C2 having the water penetrative property. In addition, the artificial soil layer C3 using the artificial soil 4 is provided on the soil supporting layer C2. Accordingly, the scattered liquid agricultural chemicals W1 or water W2 is collected by the inclined sheet member 2 and the upper artificial ground 1 is separated from the foundation 51 to maintain virus-free.

In the case of the artificial ground 1 using the artificial soil 4, growth speed of vegetables and fruits is accelerated remarkably, and Green tea, Wasabi or Japanese horseradish, medicinal carrot and the like which are difficult to be cultivated in the usual natural soil can be cultivated. The peripheral facilities including the air conditioner, the scattering system and the like can be installed in the same manner as the embodiment of Fig. 1.

In the embodiments, the artificial soil is prevented from being steamed in summer and the repeated cultivated can be made only by addition of solution such as mineral, amino acid and the like.

The embodiments have been described in detail, while the present invention is not limited to such embodiments and modification in a detailed construction, material and application can be made as defined by the appended claims.

## Claims

1. Artificial ground comprising
a collection layer (Cl) including an inclined sheet member (2) capable of collecting liquid agricultural chemicals or water,
a soil supporting layer (C2) including a water-penetrative soil supporting member (3, 17, 18; 17, 18) disposed on the collection layer (C1), and
an artificial soil layer (C3, 4) provided on the soil supporting layer (C2), which artificial soil layer (C3, 4) includes as a main ingredient the remainder of fermentation material or husks of broken seeds or pulverized husks of seeds or corncobs or sawdust, which main ingredient may have been employed as a culture ground for mushrooms prior to incorporation in the artificial soil layer (C3, 4).

2. Artificial ground according to claim 1, wherein the main ingredient of the artificial soil layer (C3, 4) has been employed as a culture ground from mushrooms prior to incorporation in the artificial soil layer (C3, 4) and in which a Myotrophy fungi is provided.

3. Artificial ground according to claim 1 or 2, wherein the artificial soil layer (C3, 4) further includes controlled amounts of water.

4. Artificial ground according to claim 1, 2 or 3, wherein the artificial soil layer (C3, 4) further includes at least one or two additives required for soil constitution.

5. Artificial ground according to any preceding claim, which further comprises a lawn (10) disposed on the artificial soil layer (C3, 4).

6. Artificial ground according to any preceding claim, wherein the main ingredient is pulverized husks of seeds formed from a member selected from the group consisting of peach pits, walnuts, rice hulls and a apricot pits.

7. Artificial ground according to any of claims 1 to 5, wherein the main ingredient is sawdust derived from trees selected from the group consisting of pines, cryptomeries, beaches, oaks, palm trees, gum tree, and birches.

8. Artificial ground according to any preceding claim, wherein the collection layer (Cl) comprises a water-tight vinyl chloride sheet (2).

9. Artificial ground according to any preceding claim, wherein the soil supporting layer (C2) comprises a water-permeable plate member (14) disposed on the collection layer (C1), a gravel layer (17) disposed on the water-permeable plate member (14), and a sand layer (18) disposed on the gravel layer (17).

10. Artificial ground according to any preceding claim, wherein the artificial soil layer (C3, 4) is encompassed by the collection layer (Cl) and the collection layer (Cl) inclines from the periphery of the artificial soil layer (C3, 4) towards a central portion of the artificial soil layer (C3, 4) below the soil supporting layer (C2).

11. Artificial ground according to any preceding claim, wherein the collection layer (C1) includes a drainage hole (12) at the lowest portion thereof which is operatively connected to a drainage pipe (13), the drainage pipe (13) being operatively associated with a filter member (25) for filtering drainage material collected in the collection layer (C1) so as to form filtered material, and the drainage pipe (13) further being operatively associated with a pump means (21) for pumping the filtered material onto the upper surface of the artificial soil layer (C3, 4) through a water dispersing means (22).

12. Artificial ground according to any preceding claim, which further comprises an air conditioning means (31) operatively associated with the collection layer (Cl) and the soil supporting layer (C2) for cooling the artificial soil layer (C3, 4).

13. Artificial ground according to any preceding claim, which further comprises support poles (33) for attachment along the periphery of the artificial soil layer (C3, 4) and a cover (34) for covering the artificial soil layer (C3, 4) upon attachment to the support poles (33).

## Patentansprüche

1. Künstlicher Untergrund, umfassend:
eine Sammelschicht (C1), die ein geneigtes Flächenteil (2) aufweist, das flüssige Agrarchemikalien oder Wasser sammeln kann,
eine Bodenträgerschicht (C2), die angeordnet auf der Sammelschicht (C1) ein wasserdurchlässiges Bodenträgerteil (3, 17, 18; 17, 18) aufweist, und
eine Kunstbodenschicht (C3, 4), die auf der Bodenträgerschicht (C2) bereitgestellt ist, wobei die Kunstbodenschicht (C3, 4) als Hauptbestandteil enthält: den Rückstand eines Fermentationsmaterials oder Schalen geöffneter Samen oder fein gemahlene Samenhülsen oder Maiskolben oder Sägemehl, wobei der Hauptbestandteil vor der Inkorporierung in die Kunstbodenschicht (C3, 4) als Pilz-Anzuchtboden gedient haben kann.

2. Künstlicher Untergrund nach Anspruch 1, wobei der Hauptbestandteil der Kunstbodenschicht (C3, 4) vor der Inkorporierung in die Kunstbodenschicht (C3, 4) als Pilz-Anzuchtboden gedient hat und worin sich mycotrophe Pilze befinden.

3. Künstlicher Untergrund nach Anspruch 1 oder 2, wobei die Kunstbodenschicht (C3, 4) zudem bestimmte Mengen an Wasser enthält.

4. Künstlicher Untergrund nach Anspruch 1, 2 oder 3, wobei die Kunstbodenschicht (C3, 4) auch zumindest ein oder zwei, für den Bodenaufbau erforderliche Zusätze enthält.

5. Künstlicher Untergrund nach irgendeinem vorhergehenden Anspruch, der ferner einen Rasen (10), angeordnet auf der Kunstbodenschicht (C3, 4), aufweist.

6. Künstlicher Untergrund nach irgendeinem vorhergehenden Anspruch, wobei der Hauptbestandteil aus pulverisierten Samenhüllen besteht, ausgewählt aus der Gruppe mit Pfirsichkernen, Walnüssen, Reisschalen und Aprikosenkernen.

7. Künstlicher Untergrund nach irgendeinem der Ansprüche 1 bis 5, wobei der Hauptbestandteil Sägemehl ist, gewonnen von Bäumen aus der Gruppe mit Kiefern, Kryptomerien, Buchen, Eichen, Palmen, Gummibäumen und Birken.

8. Künstlicher Untergrund nach irgendeinem vorhergehenden Anspruch, wobei die Sammelschicht (C1) eine wasserdichte Vinylchloridlage (2) enthält.

9. Künstlicher Untergrund nach irgendeinem vorhergehenden Anspruch, wobei die Bodenträgerschicht (C2) ein wasserdurchlässiges Flächenteil (14) aufweist, das auf der Sammelschicht (C1) angeordnet ist, eine Kiesschicht (17), die sich auf dem wasserdurchlässigen Flächenteil (14) befindet, und eine Sandschicht (18), die auf der Kiesschicht (17) liegt.

10. Künstlicher Untergrund nach irgendeinem vorhergehenden Anspruch, wobei die Kunstbodenschicht (C3, 4) von der Sammelschicht (C1) umgeben ist, und die Sammelschicht (C1) vom Rand der Kunstbodenschicht (C3, 4) hin zu einem Mittenabschnitt der Kunstbodenschicht (C3, 4) unter der Bodenträgerschicht (C2) geneigt ist.

11. Künstlicher Untergrund nach irgendeinem vorhergehenden Anspruch, wobei die Sammelschicht (C1) am tiefsten Abschnitt ein Entwässerungsloch (12) besitzt, das mit einer Entwässerungsleitung (13) funktionell verbunden ist; die Entwässerungsleitung (13) funktionell verbunden ist mit einem Filterbauteil (25) zum Filtern von dem Drainagematerial, das sich in der Sammelschicht (C1) ansammelt, so daß man ein gefiltertes Material erhält; und die Entwässerungsleitung (13) zudem mit einer Pumpvorrichtung (21) funktionell verbunden ist, so daß das gefilterte Material über eine Wasserverteilvorrichtung (22) auf die obere Fläche der Kunstbodenschicht (C3, 4) gepumpt werden kann.

12. Künstlicher Untergrund nach irgendeinem vorhergehenden Anspruch, der auch eine Luftaufbereitungsvorrichtung (31) enthält, die funktionell mit der Sammelschicht (C1) und der Erdträgerschicht (C2) verbunden ist, damit man die Kunstbodenschicht (C3, 4) kühlen kann.

13. Künstlicher Untergrund nach irgendeinem vorhergehenden Anspruch, der zudem Halterungspfosten (33) für eine Befestigung längs des Rands der Kunstbodenschicht (C3, 4) aufweist sowie eine Abdeckung (34), die die Kunstbodenschicht (C3, 4), wenn sie an den Halterungspfosten (33) befestigt ist, abdeckt.

## Revendications

1. Sol artificiel, comprenant
une couche de recueil (C1) comprenant un élément en feuille incliné (2) capable de recueillir les produits chimiques agricoles liquides ou l'eau,
une couche support de sol (C2) comprenant un élément support de sol susceptible de pénétration par l'eau (3, 17, 18 ; 17, 18) disposé sur la couche de recueil (C1) et
une couche de sol artificiel (C3, 4) disposée sur la couche support de sol (C2), laquelle couche de sol artificiel (C3, 4) comprend comme principal composant le résidu de matières de fermentation ou des cosses de graines brisées ou des cosses de graines pulvérisées ou des épis de maïs ou de la sciure, lequel principal composant peut avoir été utilisé comme sol de culture de champignons avant son incorporation dans la couche de sol artificiel (C3, 4).

2. Sol artificiel selon la revendication 1, où le principal composant de la couche de sol artificiel (C3, 4) a été utilisé comme sol de culture pour champignons avant son incorporation dans la couche de sol artificiel (C3, 4) et où il est fourni un champignon mycotrophe.

3. Sol artificiel selon la revendication 1 ou 2, où la couche de sol artificiel (C3, 4) comprend en outre des quantités contrôlées d'eau.

4. Sol artificiel selon la revendication 1, 2 ou 3, où la couche de sol artificiel (C3, 4) comprend en outre au moins un ou deux additifs requis pour la constitution du sol.

5. Sol artificiel selon l'une quelconque des revendications précédentes, lequel comprend en outre un gazon (10) disposé sur la couche de sol artificiel (C3, 4).

6. Sol artificiel selon l'une quelconque des revendications précédentes, où le principal ingrédient est constitué par des cosses de graines pulvérisées, provenant d'un élément sélectionné dans le groupe constitué par des noyaux de pêches, des noix, des enveloppes de riz et des noyaux d'abricots.

7. Sol artificiel selon l'une quelconque des revendications 1 à 5, où le principal composant est de la sciure provenant d'arbres sélectionnés dans le groupe constitué par les pins, les cryptoméria, les hêtres, les chênes, les palmiers, les gommiers et les bouleaux.

8. Sol artificiel selon l'une quelconque des revendications précédentes, où la couche de recueil (C1) comprend une feuille (2) de chlorure de vinyle imperméable à l'eau.

9. Sol artificiel selon l'une quelconque des revendications précédentes, où la couche support de sol (C2) comprend un élément en plaques perméable à l'eau (14) disposé sur la couche de recueil (C1), une couche de gravier (17) disposée sur l'élément en plaques perméable à l'eau (14) et une couche de sable (18) disposée sur la couche de gravier (17).

10. Sol artificiel selon l'une quelconque des revendications précédentes, où la couche de sol artificiel (C3, 4) est englobée par la couche de recueil (C1) et la couche de recueil (C1) s'incline de la périphérie de la couche de sol artificiel (C3, 4) en direction de la partie centrale de la couche de sol artificiel (C3, 4) en-dessous de la couche support de sol (C2).

11. Sol artificiel selon l'une quelconque des revendications précédentes, où la couche de recueil (C1) comprend à sa partie la plus basse un trou de drainage (12) qui est fonctionnellement relié à un tuyau de drainage (13), le tuyau de drainage (13) étant fonctionnellement associé à un élément filtrant (25) pour la filtration des matières de drainage recueillies dans la couche de recueil (C1) de façon à former une matière filtrée et le tuyau de drainage étant en outre fonctionnellement associé à un moyen formant pompe (21) pour pomper la matière filtrée sur la surface supérieure de la couche de sol artificiel (C3, 4) via un moyen de dispersion d'eau (22).

12. Sol artificiel selon l'une quelconque des revendications précédentes, lequel comprend en outre un moyen conditionneur d'air (31) fonctionnellement associé à la couche de recueil (C1) et à la couche support de sol (C2) pour refroidir la couche de sol artificiel (C3, 4).

13. Sol artificiel selon l'une quelconque des revendications précédentes, lequel comprend en outre des piquets supports (33) en vue de la fixation le long de la périphérie de la couche de sol artificiel (C3, 4) et une couverture (34) pour couvrir la couche de sol artificiel (C3, 4) lors de la fixation aux piquets supports (33).
